# EUROPEAN PATENT APPLICATION

(11) **EP 4 454 925 A1**
(43) Date of publication of application: **30.10.2024**
(21) Application number: 22911102.6
(22) Date of filing: 16.12.2022
(51) Int. Cl.: B60K 35/00, F16C 11/04, G02B 7/198, G02B 27/01

(54) **IMAGE PROJECTION DEVICE**

(30) Priority: 20.12.2021 JP 2021205880
(71) Applicant: KOITO MANUFACTURING CO., LTD., Minato-ku, Tokyo, 108-8711 (JP)
(72) Inventor: ENDO, Masahiro, Shizuoka-shi, Shizuoka 424-8764 (JP); FUJIYOSHI, Takatomo, Shizuoka-shi, Shizuoka 424-8764 (JP)
(74) Representative: Zimmermann, Tankred Klaus
(86) International application number: PCT/JP2022/046341
(87) International publication number: WO 2023/120398

(57) **Abstract**

Provided is an image projection device, such as an HUD device, configured so that a bearing structure of an optical element provided in the image projection device can be simplified and the optical element can be positioned. A display device (HUD) 1 includes a concave mirror 3 mounted in a device body 5 and tilted with a rotation shaft 31, 32, 61 as a pivot point. The rotation shaft 31, 61 is rotatably and pivotally supported by a shaft hole of a bearing 51, 52 provided in a side wall 53 of the device body 5. The shaft hole of the bearing 51, 52 is configured such that the rotation shaft 31, 61 to be pivotally supported is inserted from a direction different from a direction of a hole core of the shaft hole and is pivotally supported. Further, the device body 5 is provided with a positioning mechanism 7 that positions the concave mirror 3 in a rotation axis direction.

## Description

### TECHNICAL FIELD

The present invention relates to an image projection device arranged in a vehicle such as an automobile, and particularly relates to an image projection device suitable for application to a head up display.

### BACKGROUND ART

As an image projection device for an automobile, a head up display (hereinafter referred to as an HUD device) that displays a required image for an occupant of the automobile has been proposed. Patent Literature 1 proposes an HUD device configured such that an image displayed on a display device such as a liquid crystal display (LCD) is projected onto a windshield of an automobile by an optical system and a virtual image formed in front of the windshield is visually recognized by an occupant. In addition, the HUD device includes a concave mirror for reflecting the image displayed on the display device and projecting the image on the windshield in part of the optical system for projecting the image, and the concave mirror is rotated about a shaft portion by a rotation device to change the position of image projection on the windshield and adjust a viewing position of a display image.

In the HUD device of this type, a so-called bearing member is used to support the concave mirror by the shaft portion in a housing. Patent Literature 1 employs a configuration in which a support portion having a through-hole is fixed to a housing and a shaft portion is inserted into the through-hole. This support portion is provided as a separate component from the housing, which is an obstacle in reducing the number of components of the HUD device.

In the HUD device, positioning of the concave mirror is important in order to project a virtual image at a required position. Positioning can be adjusted by the rotation device in the direction about the axis of the shaft portion. For axial positioning, in Patent Literature 1, positioning is performed with axial rattling prevented by biasing the concave mirror in the axial direction with respect to the support portion by a coil spring. Thus, in Patent Literature 1, the coil spring is necessary, and also on this point, it is an obstacle in reducing the number of components.

Meanwhile, Patent Literature 2 describes a technique for regulating an axial position. In this technique, an annular positioning ring having a diameter expanded radially outward from the outer peripheral surface of a shaft portion is provided, and a positioning groove is provided at an end portion of a support portion facing part of the shaft portion. According to this configuration, the shaft portion is axially positioned in such a manner that the positioning ring is arranged in the positioning groove and contacts both axial side walls of the positioning groove in the axial direction.

### CITATION LIST

### PATENT LITERATURE

Patent Literature 1: JP-A-2019-159282
Patent Literature 2: JP-A-2019-162993

### SUMMARY OF INVENTION

### PROBLEMS TO BE SOLVED BY INVENTION

It is conceivable to apply the axial positioning technique of Patent Literature 2 to the shaft portion of the concave mirror of Patent Literature 1, but in this positioning technique, it is necessary to insert the positioning ring into the positioning groove from a direction orthogonal to the axial direction. For this reason, the configuration of the bearing portion pivotally supporting the shaft portion cannot be applied to the configuration in which the shaft portion is inserted into the through-hole provided in the support portion as in Patent Literature 1, and the structure of the bearing portion becomes complicated, for example, the bearing portion includes two members divided in a radial direction.

As described above, the conventional HUD device has problems that the bearing structure of the optical element rotatably supporting the shaft portion of the concave mirror is complicated and the structure for axial positioning of the optical element is complicated.

A first object of the present invention is to provide an image projection device, such as an HUD, capable of rotatably supporting an optical element such as a concave mirror regardless of a simple configuration with the reduced number of components. A second object of the present invention is to provide an image projection device capable of positioning an optical element in an axial direction even in a simple configuration to which a first aspect of the invention is applied.

### SOLUTION TO PROBLEMS

The present invention relates to an image projection device including an optical element mounted in a device body, projecting image light of an image toward a projection member of a vehicle, and tilted by a rotation mechanism, in which the optical element includes a rotation shaft serving as a tilting pivot point, the rotation shaft is rotatably and pivotally supported by a shaft hole opened in a side wall of the device body, and the shaft hole has a configuration in which the rotation shaft to be pivotally supported by the shaft hole is insertable from a direction different from a direction of a hole core of the shaft hole.

As a preferred aspect of the present invention, the bearing includes a first bearing surface portion supporting a half peripheral surface of the rotation shaft about the axis thereof and a second bearing surface portion supporting a remaining half peripheral surface, and the first bearing surface portion and the second bearing surface portion are displaced in the direction of the hole core of the shaft hole. Alternatively, the second bearing surface portion is elastically deformable in the direction of the hole core of the shaft hole by a slit provided in the side wall.

As another preferred aspect of the present invention, a tilting bracket of a rotation mechanism may be coupled to one end portion of the rotation shaft, and a rotation shaft provided on the tilting bracket may be pivotally supported by the shaft hole of the side wall of the device body.

Further, in the present invention, the device body may be provided with a positioning mechanism that positions the optical element in a rotation axis direction. For example, the rotation shaft or the tilting bracket includes a turning rib protruding in a radial direction of the rotation shaft, and the positioning mechanism includes a positioning rib provided on the device body to axially regulate the turning rib. In this case, the positioning rib includes, for example, a pair of positioning ribs axially sandwiching the turning rib. Moreover, in this case, the turning rib is formed as an arc rib provided in a required circumferential angular region, and is in a state of being sandwiched by the pair of positioning ribs when the optical element is at a predetermined tilting position and is in a state of being separated from the pair of positioning ribs when the optical element is tilted from the predetermined tilting position by a required angle or more.

### EFFECTS OF INVENTION

According to the present invention, since the bearing rotatably and pivotally supporting the optical element is provided on the device body, a bearing as a separate member is unnecessary, and an optical device having a simple configuration can be implemented. Further, according to the present invention, in the image projection device having a simple configuration in which the bearing is provided on the device body, axial positioning of the optical element can be implemented.

### BRIEF DESCRIPTION OF DRAWINGS

Fig. 1 is a conceptual configuration diagram of an HUD device to which the present invention is applied;
Fig. 2 is a schematic perspective view of the HUD device;
Fig. 3 is a schematic plan view of the HUD device;
Fig. 4 is a perspective view of a second rotation shaft and a tilting bracket;
Fig. 5 is an exploded perspective view of the second rotation shaft and the tilting bracket;
Fig. 6 is a schematic perspective view of a bearing of a first rotation shaft;
Fig. 7(a) is a sectional view taken along a line a-a of Fig. 6, Fig. 7(b) is a sectional view of the bearing, and Fig. 7(c) is a schematic view for describing a mold;
Fig. 8 is an exploded perspective view of a positioning mechanism;
Fig. 9 shows views for describing a step of causing a device body to support a concave mirror;
Fig. 10(a) is a side view and Fig. 10(b) is a plan view for describing operation of the positioning mechanism; and
Fig. 11 is a perspective view of a modification of a shaft hole.

### DESCRIPTION OF EMBODIMENTS

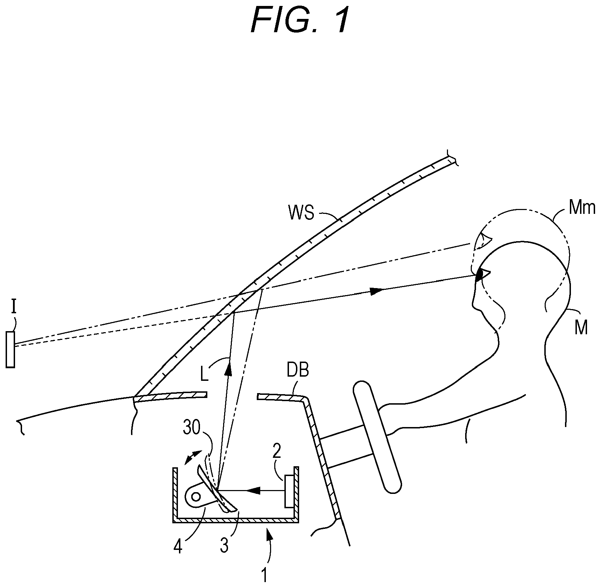

Next, an embodiment of the present invention will be described with reference to the drawings. Fig. 1 is a conceptual configuration diagram when an image projection device of the present invention is applied to an HUD device of an automobile, and shows a configuration viewed from the left side of a vehicle body of the automobile. An HUD device 1 is arranged in a dashboard DB of the automobile, and image light L emitted from the HUD device 1 is projected onto a windshield (referred to as a windshield) WS of the automobile through an opening in the upper surface of the dashboard DB. The projected image light L is reflected by the windshield WS and directed to an occupant M such as a driver of the automobile. When the image light L enters the eyes of the occupant M, the occupant M can visually recognize an image (virtual image) I by the image light at a position in front of the automobile through the windshield WS, and the image is displayed.

The HUD device 1 includes an image display unit 2 and an optical element 3 that projects an image displayed on the image display unit 2 onto the windshield WS shown in Fig. 1. The image display unit 2 is configured to display a desired image and emit image light thereof, and for example, includes a liquid crystal display device. The optical axis element 3 is configured as a reflecting mirror that reflects the image light emitted from the image display unit 2, here, a concave mirror. The concave mirror 3 has a reflecting surface portion 30 whose front surface is a spherical surface or a free-form surface having a curvature with a required focal length, and the reflecting surface portion 30 is arranged so as to face the image display unit 2. With this configuration, light emitted from the image display unit 2 and reflected by the reflecting surface portion 30 of the concave mirror 3 is projected onto the windshield WS, is reflected thereby, and enters the eyes of the occupant M.

Further, the HUD device 1 is provided with a rotation mechanism 4 for tilting the concave mirror 3 as described later. By adjusting the angle of the concave mirror 3 by the rotation mechanism 4, the direction of light reflected by the concave mirror 3 is changed as indicated by a chain line, and the position and direction of light projected onto the windshield WS are changed. Accordingly, an occupant Mm having a high line-of-sight position due to a difference in, e.g., a height can visually recognize the image I at the same position as that for the occupant M having a low line-of-sight position.

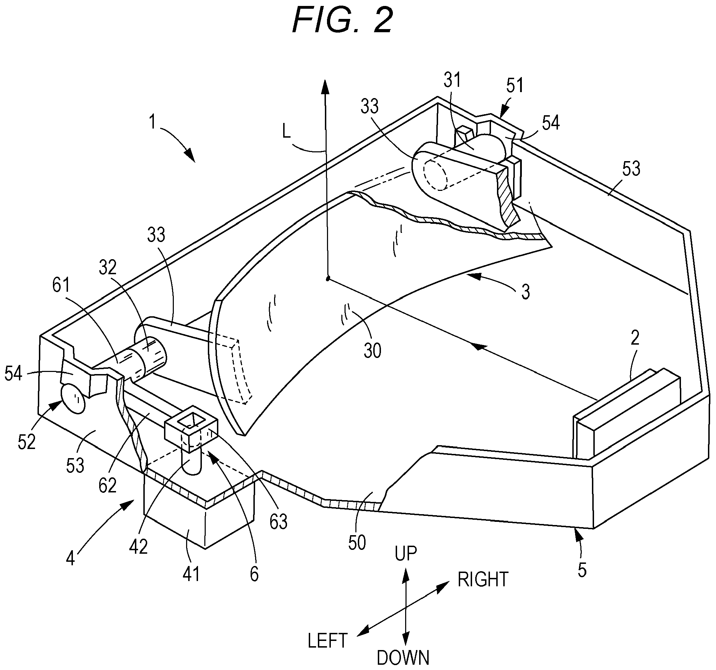

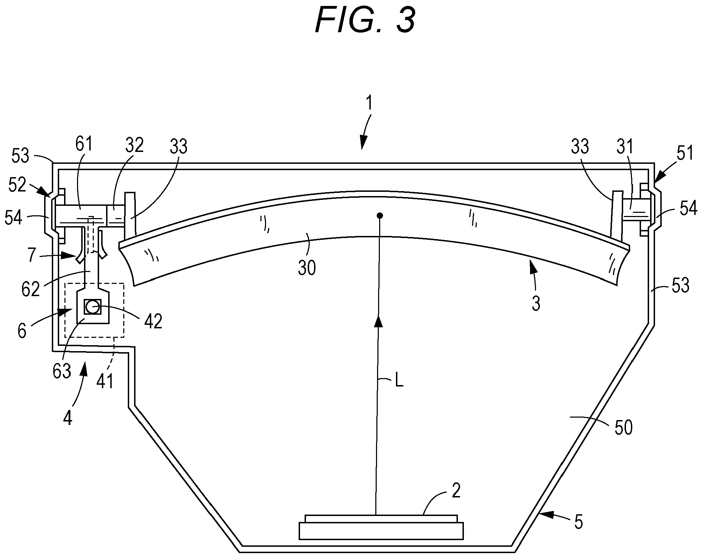

Fig. 2 is a schematic perspective view of the HUD device 1, and Fig. 3 is a schematic plan view. Note that a left-right direction and an up-down direction will be hereinafter directions based on Fig. 2. The HUD device 1 includes a shallow dishshaped device body 5, the image display unit 2 is mounted on part of an inner bottom portion 50 of the device body 5, and the concave mirror 3 is mounted at a position facing the image display unit 2.

The concave mirror 3 includes, at both left and right ends of the reflecting surface portion 30, arm portions 33 protruding in a tapered shape toward the rear surface side, and also includes circular columnar first rotation shaft 31 and second rotation shaft 32 protruding horizontally outward in the left-right direction at rotation axis positions in optical design near the tip ends of the arm portions 33.

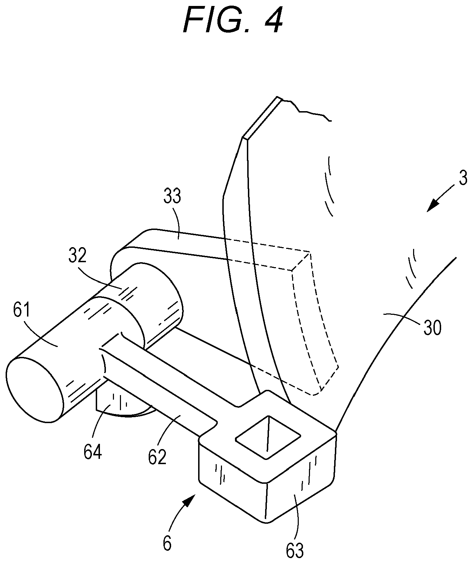

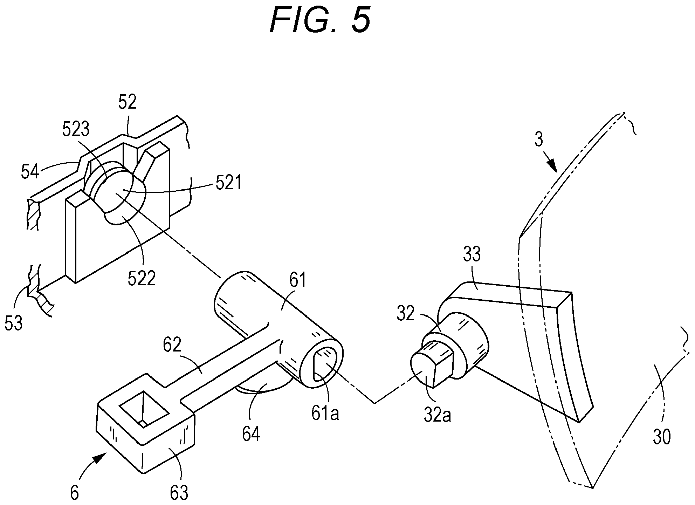

One end portion of a tilting bracket 6 forming part of the rotation mechanism 4 for tilting the concave mirror 3 is coupled to the second rotation shaft 32. As shown in a perspective view of Fig. 4 and an exploded perspective view of Fig. 5, a circular columnar shaft portion 61 is formed at one end portion of the tilting bracket 6, and a coupling hole 61a is formed in the end surface of the shaft portion 61. On the other hand, the second rotation shaft 32 is formed with a coupling portion 32a having a smalldiameter non-circular-columnar shape in which part of a circumferential surface is cut flat. The coupling portion 32a is inserted into the coupling hole 61a provided in the tilting bracket 6 to couple the second rotation shaft 32 to the tilting bracket 6. Since the coupling hole 61a is formed as a recessed hole having a sectional shape with a flat surface at part of an inner peripheral surface as in the coupling portion 32a, the tilting bracket 6 is integrated with the second rotation shaft 32 in a direction about the axis when the coupling portion 32a is inserted into the coupling hole 61a.

As described above, the shaft portion 61 at one end portion of the tilting bracket 6, which is integrated with the second rotation shaft 32, has an axis coincident with the axis of the second rotation shaft 32, and is integrally rotated with the second rotation shaft 32. Thus, the shaft portion 61 is configured as a third rotation shaft of the concave mirror 3. The third rotation shaft 61 is formed on the same axis as those of the first rotation shaft 31 and the second rotation shaft 32. Of the tilting bracket 6, an intermediate portion 62 in a length direction is formed in a plate shape, and the other end portion 63 is formed in a rectangular tubular shape and is coupled to a drive rod 42 of a later-described actuator 41 serving as a drive source of the rotation mechanism 4.

As shown in Figs. 2 and 3, the concave mirror 3 is supported such that the first rotation shaft 31 and the third rotation shaft 61 are rotatable about the axis by first and second bearings 51, 52 provided on the device body 5. Here, the bearings are formed on side walls facing the first rotation shaft 33 and the third rotation shaft among side walls surrounding the inner bottom portion 50 of the device body, and the first rotation shaft and the third rotation shaft are pivotally supported by the corresponding bearings.

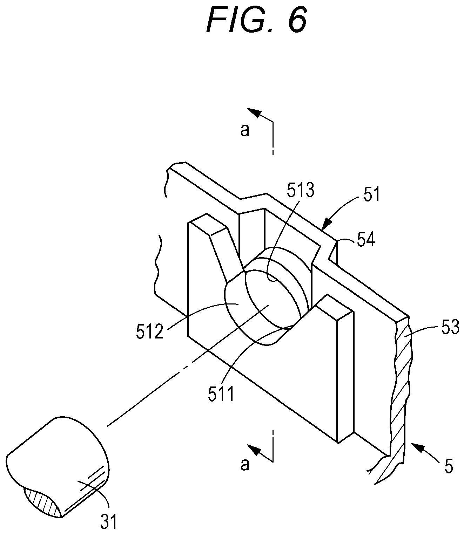

Fig. 6 is a perspective view of the first rotation shaft 31 and the first bearing 51 that pivotally supports the first rotation shaft 31. A circular shaft hole 511 is opened so as to penetrate, in a wall thickness direction, a side wall 53 of the device body 5 corresponding to the first rotation shaft 31. The inner diameter dimension of the shaft hole 511 is equal to the outer diameter dimension of the first rotation shaft 31. The shaft hole 511 is configured to contact the peripheral surface of the first rotation shaft 31 at an inner peripheral edge portion to pivotally support the first rotation shaft 31, and includes a lower bearing surface portion 512 that contacts the lower half of the peripheral surface of the first rotation shaft 31 and an upper bearing surface portion 513 that contacts the upper half of the peripheral surface of the first rotation shaft 31.

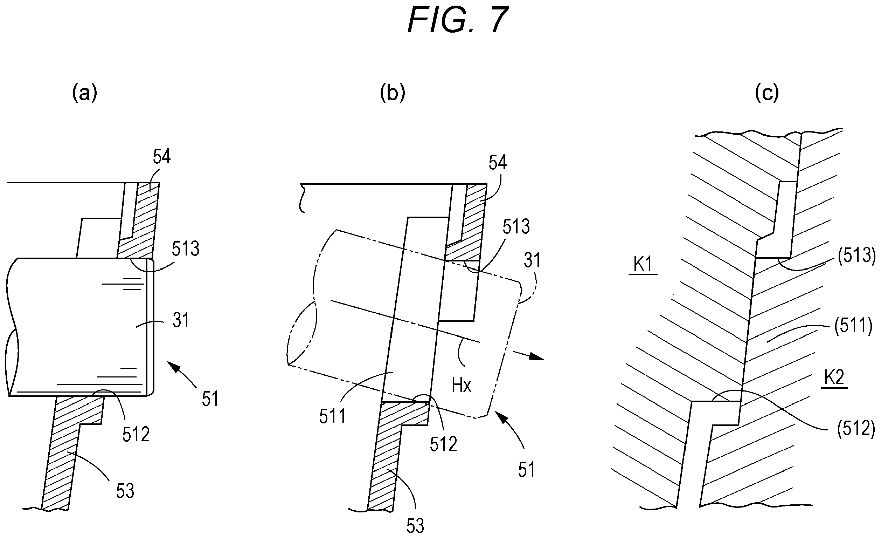

Fig. 7 shows enlarged sectional views taken along a line a-a of Fig. 6, Fig. 7(a) showing a view in a state in which the first rotation shaft 31 is pivotally supported and Fig. 7 (b) showing a view in a state in which the first rotation shaft 31 is not pivotally supported. The first bearing surface portion 512 of the shaft hole 511 is formed in such a semicircular surface shape that a portion of the side wall 53 along the peripheral edge of the lower half of the shaft hole 511 protrudes outward by a required dimension. A wall portion 54 forming a peripheral edge portion of the upper half of the shaft hole 511 protrudes outward from the wall portion forming the lower bearing surface portion 512, and the upper bearing surface portion 513 having a semicircular surface shape is formed at the lower edge of the wall portion 54. Thus, the upper bearing surface portion 513 is formed at a position displaced outward of the lower bearing surface portion 512.

As described above, the lower bearing surface portion 512 and the upper bearing surface portion 513 are displaced along the direction of the hole core of the shaft hole 511, so that when the device body 5 is molded from resin, the device body 5 can be formed only in such a manner that boundary surfaces of an upper mold K1 and a lower mold K2 for molding the side walls 53, 54 are partially displaced at the shaft hole 511 as shown in Fig. 7(c). This eliminates the need for a slider mold for forming the shaft hole 511 and facilitates manufacturing of the device body 5.

As also shown in Fig. 5, the configuration of the second bearing 52 that pivotally supports the third rotation shaft 61 is similar to the configuration of the first bearing 51, and therefore, detailed description thereof will be omitted. Also in this second bearing, a lower bearing surface portion 522 and an upper bearing surface portion 523 for a shaft hole 521 are displaced in the direction of the hole core of the shaft hole 521. Thus, the upper bearing surface portion 523 is displaced outward of the lower bearing surface portion 522.

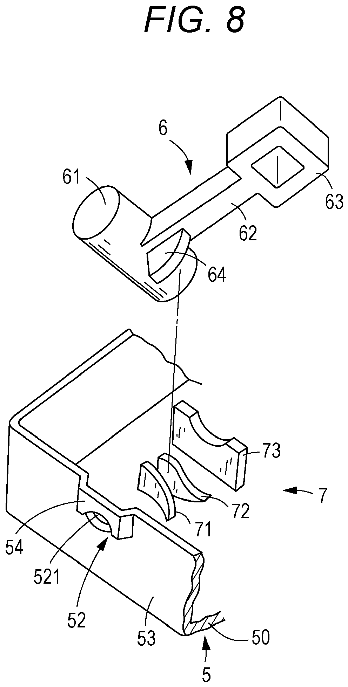

Further, the HUD1 is provided with a positioning mechanism 7 that positions the concave mirror 3 in a rotation axis direction. As shown in an exploded perspective view of the positioning mechanism 7 in Fig. 8, a plate-shaped arc rib 64 protruding in the radial direction of the third rotation shaft 61 is integrally formed on part of the lower surface of the tilting bracket 6. The arc rib 64 is also shown in Figs. 4 and 5, and is formed in a substantially 1/4 arc shape centered on the shaft core of the third rotation shaft 61. In addition, the diameter dimension and arc angle of the arc rib 64 are designed such that at least part of the arc rib 64 is rotationally positioned in a region below the third rotation shaft 61 when the concave mirror 3 is set at a normal angular position in the device body 5.

On part of the inner bottom portion 50 of the device body 5 corresponding to the arc rib 64, i.e., a portion located immediately below the tilting bracket 6 when the third rotation shaft 61 is pivotally supported, a pair of positioning ribs 71, 72 facing each other with a predetermined gap in the axial direction of the third rotation shaft 61 stands. The axial gap between the positioning ribs 71, 72 is substantially equal to the thickness dimension (dimension in the axial direction) of the arc rib 64. In addition, tip-end-side edge portions (right edge portions in Fig. 8) of the positioning ribs 71, 72 oriented in the counterclockwise direction of the third rotation shaft 61 are in a tapered shape such that a gap dimension is increased to a certain degree. Note that in Fig. 8, an auxiliary bearing 73 is provided for stabilizing a pivotally-supported state of the coupling portion between the second rotation shaft 32 and the third rotation shaft 61 to enhance a positioning effect, but is not necessarily provided.

In the HUD having the above-described configuration, when the HUD1 is configured such that the concave mirror 3 is mounted and supported in the device body 5 as shown in Fig. 2, the first rotation shaft 31 and the third rotation shaft 61 are inserted into the corresponding shaft holes 511, 521 of the first bearing 51 and the second bearing 52 and are pivotally supported. At this time, in order for the first rotation shaft 31 and the third rotation shaft 61 to be pivotally supported by the first bearing 51 and the second bearing 52 provided on the opposing side walls 53 of the device body 5, an overall axial dimension from the first rotation shaft 31 to the third rotation shaft 61 needs to be longer than a dimension between the opposing side walls 53 of the device body 5 (dimension between the inner surfaces of both side walls). Thus, both the rotation shafts 31, 61 cannot be inserted from the direction of the hole core of the shaft hole 511, 521 of each bearing 51, 52.

As in the first bearing 51 shown in Fig. 7(b), the upper bearing surface portion 513 is displaced outward of the lower bearing surface portion 512 along the direction of a hole core Hx of the shaft hole 511 in this bearing, and therefore, a margin space is generated immediately above the lower bearing surface portion 512 by the displaced dimension. Thus, by using this margin space, the first rotation shaft 31 can be inserted into the shaft hole 511 obliquely from above with respect to the direction of the hole core of the shaft hole 511 as indicated by a chain line in this drawing. Similarly, the third rotation shaft 61 can also be pivotally supported by the second bearing 52.

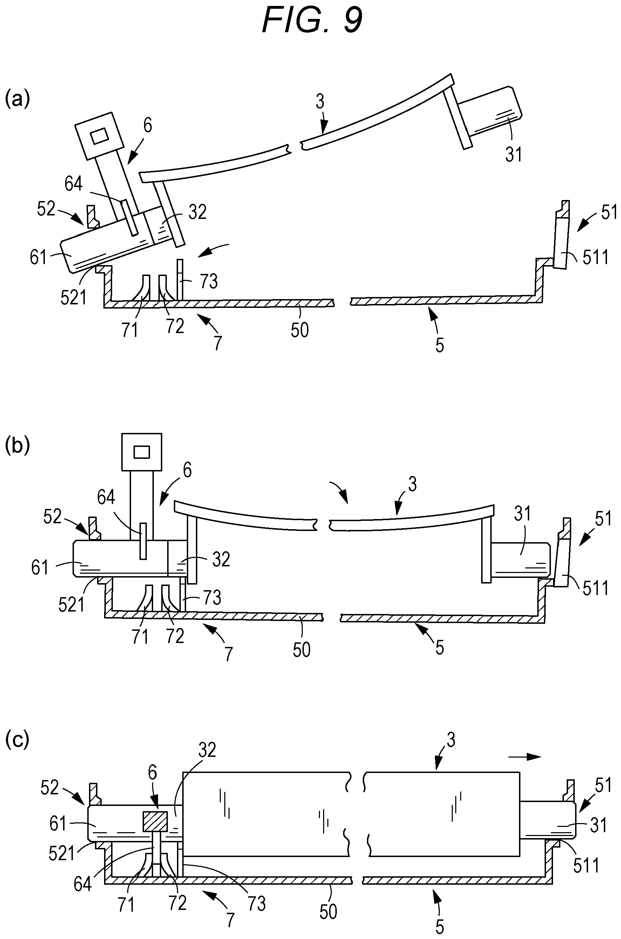

For example, as shown in Fig. 9(a), first, in a state in which the concave mirror 3 is inclined in the up-down direction, i.e., from a direction inclined with respect to the hole core of the shaft hole 521 of the second bearing 52, the third rotation shaft 61 is brought into contact with the shaft hole 521, and is further moved to the left in the axial direction, whereby the third rotation shaft 61 is inserted into the shaft hole 521. Then, as shown in Fig. 9(b), the posture of the concave mirror 3 is adjusted such that the axial direction of the first rotation shaft 31 matches the hole core of the shaft hole 511 of the corresponding first bearing 51. Thereafter, as shown in Fig. 9(c), the concave mirror 3 is moved in the right direction, and the first rotation shaft 31 is inserted into the shaft hole 511 of the corresponding first bearing 51. In this manner, the first rotation shaft 31 of the concave mirror 3 is pivotally supported by the first bearing 51, and the third rotation shaft 61 of the concave mirror 3 is supported by the second bearing 52.

As described above, the first bearing 51 and the second bearing 52 are configured such that the lower bearing surface portion 511, 521 and the upper bearing surface portion 512, 522 are displaced in the direction of the hole core of the shaft hole 511, 521, therefore, the first rotation shaft 31 and the third rotation shaft 61 can be pivotally supported. In particular, even if the axial dimensions of the lower bearing surface portion 512, 522 and the upper bearing surface portion 513, 523 of each bearing 51, 52 are designed to be long, each rotation shaft 31, 61 can be inserted and pivotally supported. Thus, it is possible to ensure the contact areas of the lower bearing surface portion 512, 522 and the upper bearing surface portion 513, 623 with the peripheral surfaces of the rotation shafts 31, 61 and to realize stable shaft support.

When a concave mirror is mounted in the device body as described above, the concave mirror 3 is pivotally supported with the reflecting surface portion 30 facing upward. That is, in the steps of Figs. 9(a) and 9(b), the angular position (position in a tilting direction) of the concave mirror 3 is changed from the normal state, and the arc rib 64 is directed upward or sideways with respect to the inner bottom portion 50 of the device body 5. As described above, when the concave mirror 3 is moved in the left-right direction in order to pivotally support the rotation shafts 31, 61, the reflecting surface portion 30 of the concave mirror 3 is directed upward, and in this manner, the concave mirror 3 can be moved in the left-right direction without the arc rib 64 contacting the pair of positioning ribs 71, 72 and the rotation shafts 31, 61 can be pivotally supported.

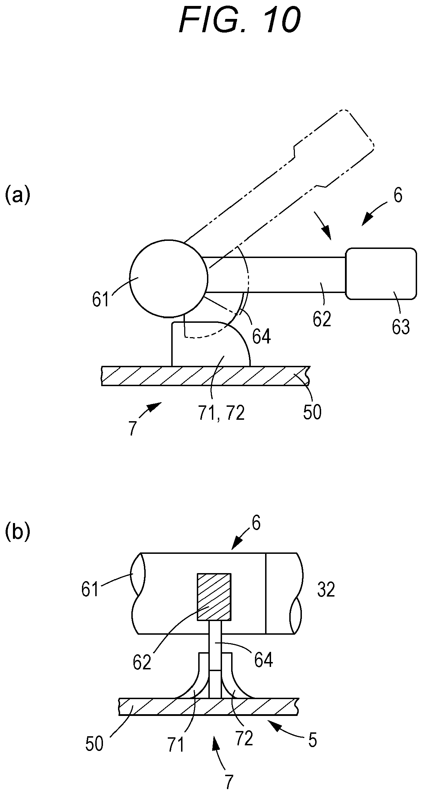

As shown in Fig. 9(c), when the rotation shafts 31, 61 are rotated such that the concave mirror 3 is at the normal tilting position after the rotation shafts 31, 61 have been completely pivotally supported, the first rotation shaft 31 is turned from a position indicated by a chain line in Fig. 10(a) to a position indicated by a solid line, and the arc rib 64 is inserted and positioned between the pair of positioning ribs 71, 72 as shown in Fig. 10(b). At this time, even if the position of the concave mirror 3 in the left-right direction (axial direction) is slightly shifted, the tip-end-side edge portions of the pair of positioning ribs 71, 72 are opened in the tapered shape, and therefore, the arc rib 64 is guided by these tip-end-side edge portions and is inserted and positioned between the positioning ribs 71, 72. Since the inserted and positioned arc rib 64 is sandwiched in the axial direction by the pair of positioning ribs 71, 72, the position of the arc rib 64, the position of the tilting bracket 6 integrated therewith, and the position of the concave mirror 3 coupled to the tilting bracket 6 in the left-right direction are regulated. Thus, even if the bearings 51, 52 are configured such that the rotation shafts 31, 61 cannot be regulated in the axial direction, the position of the concave mirror 3 in the left-right direction can be determined at a predetermined position.

As shown in Fig. 2, the actuator 41 of the rotation mechanism 4 coupled to the other end portion of the tilting bracket is fixed to the lower surface of the inner bottom portion 50 of the device body 5, and for example, includes a drive rod 42 having a screw configuration spirally moved by a motor. The drive rod 42 protrudes upward from the inner bottom portion 50 of the device body 5, and is moved in the axial direction, i.e., the up-down direction. The other end portion 63 of the tilting bracket 6 is coupled to the upper tip end of the drive rod 42 by a ball joint, and can be tilted by up-down movement of the drive rod 42. The third rotation shaft 61 can be rotated by such tilting, the second rotation shaft 32 and the first rotation shaft 31 coupled thereto can be further rotated, and the concave mirror 3 can be tilted.

With such a rotation mechanism 4, as described with reference to Fig. 1, in the HUD device 1, the image light of the image displayed on the image display unit 2 is reflected by the concave mirror 3 and is further projected onto the windshield WS of the automobile, so that the occupant M can visually recognize the display image (virtual image) I at the position in front of the automobile through the windshield WS. Further, by controlling the actuator 41 of the rotation mechanism 4, the tilting bracket 6 is tilted in the vertical direction with the third rotation shaft 61 as a pivot point, the second rotation shaft 32 coupled thereto and the first rotation shaft 31 on the opposite side to the third rotation shaft 61 are integrally rotated, and the concave mirror 3 is tilted. In this manner, the tilting angle of the reflecting surface portion 30 changes. The position and direction of the image light projected onto the windshield WS are changed by control of a change in the tilting angle of the reflecting surface portion 30, and adjustment is performed so that the occupants M, Mm having different line-of-sight positions can visually recognize the image I at the same position.

As described above, in the HUD device 1, the first rotation shaft 31 and the third rotation shaft 61 serving as pivot points when the concave mirror 3 tilts are pivotally supported by the bearings 51, 52 provided on the side walls of the device body 5. In these bearings 51, 52, the rotation shafts 31, 61 are simply inserted into the shaft holes 511, 521, and therefore, an independent configuration or member for pivotally supporting the shaft is unnecessary, the configuration of the device body 5 can be simplified, and an increase in the number of components can be suppressed. Further, when the bearings 51, 52 are formed, the bearings 51, 52 can be easily manufactured without requiring a slider in a mold for molding the device body 5.

On the other hand, the rotation shafts 31, 61 are pivotally supported by the lower bearing surface portions 512, 522 and the upper bearing surface portion 513, 523, which can be designed to have long dimensions in the axial direction of the bearings 51, 52, across relatively-wide areas over the entire circumferences of the rotation shafts 31, 61, and therefore, can be stably pivotally supported. Further, even when the bearings are configured in this manner, the rotation shafts 31, 61 can be inserted into the shaft holes obliquely with respect to the hole cores of the shaft holes 511, 521 of the bearings 51, 53 and can be pivotally supported, and a process of arranging the concave mirror 3 in the device body 5 is facilitated.

On the other hand, the arc rib 64 is integrally formed on the concave mirror 3 side, and the pair of positioning ribs 71, 72 is formed on the device body 5. When the concave mirror 3 is arranged in the device body, the arc rib 64 is inserted and positioned between the positioning ribs 71, 72 and is regulated in the axial direction. With this configuration, even in a configuration in which the axial positions of the rotation shafts 31, 61 cannot be regulated in the bearings 51, 52 as described above when the concave mirror 3 is mounted in the device body 5, the concave mirror 3 can be positioned in the axial direction with respect to the device body 5. Thus, it is possible to prevent the position of the display image from changing in the left-right direction due to a change in the position of the concave mirror 3 in the left-right direction.

In addition, the arc rib 64 integrally formed on the concave mirror 3 side can be in a state in which the arc rib 64 overlaps with the positioning ribs 71, 72 in the axial direction due to a change in the tilting angular position of the concave mirror 3, i.e., the rotation angular positions of the rotation shafts 31, 61 and the axial position thereof is regulated and a state in which the arc rib 64 does not overlap with the positioning ribs 71, 72 and the axial position thereof is not regulated. Thus, by adjusting the tilting angle of the concave mirror 3, the rotation shafts 31, 61 can be pivotally supported, and the axial position of the concave mirror 3 can be regulated in the pivotally-supported state.

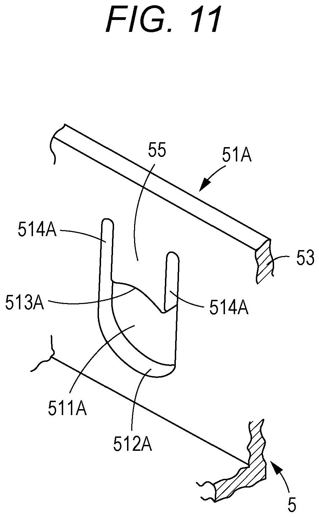

Fig. 11 is a perspective view of a bearing 51A as a modification of the first bearing. The side wall 53 of the device body 5 is formed in a flat plate shape, and a circular shaft hole 511A having an inner diameter substantially equal to the outer diameter of the rotation shaft is opened so as to penetrate the side wall 53 in the wall thickness direction, so that the first rotation shaft can be inserted therein. With this configuration, the inner peripheral surface of the shaft hole 511A is configured as a bearing surface portion having an axial dimension equal to the wall thickness dimension of the side wall 53.

The lower half of the bearing surface portion is configured as a lower bearing surface portion 512A, and the upper half is configured as an upper bearing surface portion 513A. A pair of slits 514A having a required dimension is formed upward in boundary portions of the lower bearing surface portion 512A and the upper bearing surface portion 513A on both sides thereof. These slits 514A are formed so as to separate the side wall 53 in the wall thickness direction, and accordingly, a portion sandwiched between the pair of slits 514A, i.e., a wall portion 55 including the upper bearing surface portion 513A is elastically deformable in the wall thickness direction.

Also in this modification, when the rotation shaft is pivotally supported by the bearing, an end portion of the rotation shaft is inserted into the shaft hole obliquely with respect to the shaft core of the shaft hole 511A. At the time of such insertion, a tip end portion of the rotation shaft is brought into contact with the wall portion 55 in the vicinity of the upper bearing surface portion 513A, and such a wall portion 55 is further elastically deformed toward the outside of the side wall 53. In this manner, the rotation shaft can be inserted into the shaft hole 511A. When the axis of the rotation shaft coincides with the hole core of the shaft hole 511A after insertion of the rotation shaft, the wall portion 55 is elastically returned, the upper bearing surface portion 513A contacts the peripheral surface of the rotation shaft, and pivotally supports the rotation shaft together with the lower bearing surface portion 512A.

Also in the bearing of this modification, an independent bearing member is unnecessary, and the device body or the bearing can be simplified. On the other hand, even when an axial positioning mechanism is provided, the rotation shaft can be pivotally supported by the bearing, and a function of positioning the concave mirror by the positioning mechanism can be obtained.

In the embodiment, the third rotation shaft is provided on the tilting bracket, and the third rotation shaft is inserted into and pivotally supported by the shaft hole of the device body. However, the second rotation shaft provided on the concave mirror may be inserted into and supported by the shaft hole provided in the device body. In this case, the tilting bracket may be integrally coupled to part of the second rotation shaft in the axial direction so as to transmit tilting of the tilting bracket to the second rotation shaft.

The positioning mechanism in the present invention may be configured such that a pair of arc ribs is arranged on the rotation shaft or the tilting bracket at a predetermined interval in the axial direction and one positioning rib axially sandwiched by the pair of arc ribs is arranged on the device body. The arc rib may be arranged on the rotation shaft integrally formed with the concave mirror, for example, the first rotation shaft or the second rotation shaft of the embodiment, and the tilting bracket may also be integrally molded with the concave mirror. Further, in the present invention, the arc rib is not necessarily in an arc shape, and may be configured as a turning rib which can advance and retreat between the pair of positioning ribs along with rotation of the rotation shaft.

The image projection device of the present invention is not limited to the HUD device described in the embodiment, and can be applied to a display device including an optical element pivotally supported by a rotation shaft on a device body and tilted about the rotation shaft. When the present invention is configured as the HUD device, a transparent plastic disk such as a combiner may be used. Further, the optical element in the present invention is not limited to the concave mirror, and any optical element can be applied as long as the optical element is rotatably supported by the device body and is rotated by the rotation mechanism to change the display position and direction of a display image.

The present international application claims priority based on Japanese Patent Application No. 2021-205880 filed on December 20, 2021, and the entire contents of Japanese Patent Application No. 2021-205880 are incorporated herein by reference.

The description of the specific embodiments of the present invention is presented for the purpose of illustration. The specific embodiments are not intended to be exhaustive or to limit the invention as it is in the form described. It is obvious to those skilled in the art that many modifications and alterations are possible in light of the contents of the description above.

### LIST OF REFERENCE SIGNS

- 1: HUD device (image projection device)
- 2: Image display unit
- 3: Concave mirror (optical element)
- 4: Rotation mechanism
- 5: Device body
- 6: Tilting bracket
- 7: Positioning mechanism
- 30: Reflecting surface portion
- 31: First rotation shaft
- 32: Second rotation shaft
- 33: Arm portion
- 41: Actuator
- 42: Drive rod
- 51: First bearing
- 52: Second bearing
- 61: Third rotation shaft
- 64: Arc rib (turning rib)
- 71, 72: Positioning rib
- 511, 521: Shaft hole
- 512, 522: Lower bearing surface portion
- 513, 523: Upper bearing surface portion
- WS: Windshield (projection member)

## Claims

1. An image projection device comprising: an optical element mounted in a device body, projecting image light of an image toward a projection member of a vehicle, and tilted by a rotation mechanism, wherein the optical element includes a rotation shaft serving as a tilting pivot point, the rotation shaft is rotatably and pivotally supported by a shaft hole opened in a side wall of the device body, and the shaft hole has a configuration in which the rotation shaft to be pivotally supported by the shaft hole is insertable from a direction different from a direction of a hole core of the shaft hole.

2. The image projection device according to claim 1, wherein the bearing includes a first bearing surface portion supporting a half peripheral surface of the rotation shaft about an axis thereof and a second bearing surface portion supporting a remaining half peripheral surface, and the first bearing surface portion and the second bearing surface portion are displaced in the direction of the hole core of the shaft hole.

3. The image projection device according to claim 1, wherein the bearing includes a first bearing surface portion supporting a half peripheral surface of the rotation shaft about an axis thereof and a second bearing surface portion supporting a remaining half peripheral surface, and the second bearing surface portion is elastically deformable in the direction of the hole core of the shaft hole by a slit provided in the side wall.

4. The image projection device according to any one of claims 1 to 3, wherein a tilting bracket of a rotation mechanism is coupled to one end portion of the rotation shaft, and a rotation shaft provided on the tilting bracket is pivotally supported by the shaft hole of the side wall of the device body.

5. The image projection device according to any one of claims 1 to 3, wherein the device body is provided with a positioning mechanism that positions the optical element in a rotation axis direction.

6. The image projection device according to claim 5, wherein the rotation shaft or the tilting bracket includes a turning rib protruding in a radial direction of the rotation shaft, and the positioning mechanism includes a positioning rib provided on the device body to axially regulate the turning rib.

7. The image projection device according to claim 6, wherein the positioning rib includes a pair of positioning ribs axially sandwiching the turning rib.

8. The image projection device according to claim 6, wherein the turning rib is formed as an arc rib provided in a required circumferential angular region, and is in a state of being sandwiched by the pair of positioning ribs when the optical element is at a predetermined tilting position and is in a state of being separated from the pair of positioning ribs when the optical element is tilted from the predetermined tilting position by a required angle or more.

9. The image projection device according to any one of claims 1 to 3, wherein the optical element is a concave mirror, and is tilted such that an angle of a reflecting surface of the optical element is changed with respect to the projection member.

10. The image projection device according to claim 9, wherein the image projection device is configured as a head up display of an automobile, and the projection member is a windshield or a combiner of the automobile.
